# EUROPÄISCHE PATENTSCHRIFT

(11) **EP 2 575 564 B1**
(45) Veröffentlichungstag und Bekanntmachung des Hinweises auf die Patenterteilung: **25.05.2022**
(21) Anmeldenummer: 11702929.8
(22) Anmeldetag: 24.01.2011
(51) Int. Cl.: A47J 31/36

(54) **BRÜHVORRICHTUNG UND -VERFAHREN ZUM EXTRAHIEREN EINER PORTIONSKAPSEL**
BREWING APPARATUS AND METHOD FOR EXTRACTING A PORTION CAPSULE
DISPOSITIF ET PROCÉDÉ D'INFUSION DESTINÉ À LA LIXIVIATION D'UNE DOSETTE

(30) Priorität: 10.09.2010 DE 102010044945; 28.05.2010 DE 102010021849
(43) Veröffentlichungstag der Anmeldung: 10.04.2013
(60) Teilanmeldung: 15001007.2
(73) Patentinhaber: Eugster/Frismag AG Elektrohaushaltgeräte, 8580 Amriswil (CH)
(72) Erfinder: FISCHER, Daniel, CH-8590 Romanshorn (CH); SEGER, Christof, CH-8593 Kesswill (CH); HUEPPI, Marcel, W., CH-9404 Rorschacherberg (CH)
(74) Vertreter: Wolff, Felix
(86) Internationale Anmeldenummer: PCT/EP2011/000271
(87) Internationale Veröffentlichungsnummer: WO 2011/147491

(56) Entgegenhaltungen:
- EP-A1- 0 891 734
- EP-A1- 1 219 217
- EP-A1- 1 295 554
- EP-A1- 1 500 357
- EP-A1- 1 529 469
- EP-A1- 1 774 878
- EP-A2- 1 369 069
- WO-A2-2008/023057
- CH-B1- 697 407
- DE-T2- 60 002 820

## Beschreibung

### Stand der Technik

Die vorliegende Erfindung betrifft eine Brühvorrichtung zum Extrahieren einer Portionskapsel mit einem ersten Brühkammerelement und einem zweiten Brühkammerelement, wobei das erste und/oder das zweite Brühkammerelement entlang einer axialen Richtung zwischen einer Ladestellung, in welcher das erste und das zweite Brühkammerelement voneinander beabstandet sind, und einer Extraktionsstellung, in welcher das erste und das zweite Brühkammerelement eine im Wesentlichen geschlossene Brühkammer bilden, bewegbar ist.

Solche Brühvorrichtungen sind allgemein bekannt. Beispielsweise ist aus der Druckschrift EP 2 077 087 A1 eine Brühvorrichtung für eine Portionskapsel bekannt, welche ein zweites Brühkammerelement in Form eines Aufnahmeelements mit einem Hohlraum zur Aufnahme der Portionskapsel und ein erstes Brühkammerelement in Form eines Verschlusselements zum Verschließen des Hohlraums umfasst. Das Verschlusselement umfasst dabei eine Injektionsanordnung zum Einleiten von Extraktionsflüssigkeit in die Portionskapsel, während das Aufnahmeelement eine Extraktionsanordnung umfasst, um die mit einer in der Portionskapsel angeordneten Getränkesubstanz wechselwirkende Extraktionsflüssigkeit aus der Portionskapsel abzuführen und zur Bereitstellung eines Getränks einem Trinkgefäß zuzuführen. Zur Befüllung der Brühvorrichtung mit der Portionskapsel wird das Verschlusselement in eine Ladestellung überführt, in der es von dem Aufnahmeelement beabstandet ist. Anschließend wird die Portionskapsel in einen Zwischenraum zwischen dem Aufnahmeelement und dem Verschlusselement eingeführt und daraufhin das Verschlusselement in Richtung des Aufnahmeelements entlang einer axialen Richtung verschoben, wodurch die Portionskapsel in den Hohlraum des Aufnahmeelements eingeführt wird. Das Aufnahmeelement und das Verschlusselement bilden in der Extraktionsstellung eine im Wesentlichen geschlossene Brühkammer zur Extraktion der Portionskapsel. Die Getränkesubstanz umfasst insbesondere zu extrahierenden Röst- oder Instant-Kaffee. Ferner ist bekannt, derartige Brühvorrichtungen mit Perforationsmitteln auszustatten, welche die Portionskapsel zum Einleiten der Extraktionsflüssigkeit oder zum Ableiten des Getränkeextrakts während oder nach dem Schließen der Brühkammer perforieren.

Eine ähnliche Brühkammer ist ferner aus der Druckschrift EP 1 295 554 A1 bekannt, bei welcher ebenfalls eine Brühkammer aus zwei Brühkammerteilen gebildet wird und die Portionskapsel nacheinander jeweils von Perforationselementen des einen und des anderen Brühkammerteils perforiert wird. Aus der Druckschrift CH 697 407 B1 ist ferner eine Brühkammer bekannt, bei welcher ein Brühkammerteil manuell, ähnlich wie bei einer klassischen Siebträgermaschine, in die Getränkezubereitungsmaschine eingesetzt wird. Ein in diesem Brühkammerteil befindliche Portionskapsel wird sodann bei der Durchführung des Brühprozesses von Perforationselementen perforiert. Weitere Maschinen sind aus den Druckschriften EP 1 774 878 A1, EP 1 219 217 A1, WO 2008 / 023 057 A2, EP 1 529 469 A1, EP 1 369 069 A2. EP 0 891 734 A1, EP 1 500 357 A1 und DE 600 02 820 T2 bekannt.

Nachteilig an solchen Brühvorrichtungen ist einerseits, dass bei einer gleichmäßigen Perforation der Portionskapsel im Bereich der Injektionsanordnung die Portionskapsel von der Extraktionsflüssigkeit auf kürzestem Weg, d.h. im Wesentlichen parallel zur axialen Richtung, und mit vergleichsweise hoher Geschwindigkeit durchströmt wird, so dass nur eine geringe Wechselwirkung zwischen der Getränkesubstanz und der Extraktionsflüssigkeit erzielt wird. Wenn die Kapsel nicht vollständig mit der Getränkesubstanz gefüllt ist, besteht zudem die Gefahr, dass die Getränkesubstanz durch die Schwerkraft in der Kapsel nach unten rutscht und die Extraktionsflüssigkeit ohne nennenswerte Wechselwirkung über die Getränkesubstanz hinweg in Richtung Austrittsöffnung fließt. Darüberhinaus besteht eine potentielle Verletzungsgefahr für den Benutzer der Brühvorrichtung, wenn er durch die Ladeöffnung mit den messerscharfen Perforationsmitteln in Berührung kommen kann.

Der Erfindung liegt daher die Aufgabe zu Grunde, eine Brühvorrichtung zum Extrahieren einer Portionskapsel bereitzustellen, welche die Nachteile des Standes der Technik nicht aufweist und eine gegenüber dem Stand der Technik deutliche verbesserte Wechselwirkung zwischen der Getränkesubstanz und der Extraktionsflüssigkeit erzielt wird, wodurch die Geschmacksqualität des extrahierten Getränks verbessert wird. Darüberhinaus soll ein vergleichsweise sicheres und fehlerfreies Einführen der Portionskapsel ermöglicht werden.

### Offenbarung der Erfindung

Die Erfindung wird definiert durch eine Brühvorrichtung nach Anspruch **1** und ein Verfahren zum Betrieb einer Brühvorrichtung nach Anspruch **8.** Weitere Ausführungsformen werden offenbart durch die abhängigen Ansprüche **2-7** und **9-10.**

Die Erfindung wird nachfolgend anhand von in Zeichnungen dargestellten Ausführungsbeispielen näher erläutert. Die Zeichnungen illustrieren lediglich beispielhafte Ausführungsformen der Erfindung, welche den wesentlichen Erfindungsgedanken nicht einschränken.
- **Figuren 1a bis 1k**: zeigen schematische Schnittbildansichten einer Brühvorrichtung gemäß einer ersten Ausführungsform der vorliegenden Erfindung.
- **Figuren 2a bis 2c**: zeigen schematische Ansichten eines ersten Brühkammerelements einer Brühvorrichtung gemäß einer zweiten Ausführungsform der vorliegenden Erfindung.
- **Figur 3**: zeigt eine schematische Schnittbildansicht eines ersten Brühkammerelements einer Brühvorrichtung gemäß einer dritten Ausführungsform.
- **Figuren 4a bis 4d**: zeigen schematische Ansichten eines ersten Brühkammerelements einer Brühvorrichtung gemäß einer vierten Ausführungsform der vorliegenden Erfindung.
- **Figuren 5a bis 5c**: zeigen schematische Ansichten eines ersten Brühkammerelements einer Brühvorrichtung gemäß einer fünften Ausführungsform der vorliegenden Erfindung.
- **Figur 6**: zeigt eine schematische Ansicht eines ersten Brühkammerelements einer Brühvorrichtung gemäß einer sechsten Ausführungsform der vorliegenden Erfindung.
- **Figur 7**: zeigt eine schematische Ansicht eines ersten Brühkammerelements einer Brühvorrichtung gemäß einer siebten Ausführungsform der vorliegenden Erfindung.
- **Figur 8**: zeigt eine schematische Ansicht eines ersten Brühkammerelements einer Brühvorrichtung gemäß einer achten Ausführungsform der vorliegenden Erfindung.

In den verschiedenen Figuren sind gleiche Teile stets mit den gleichen Bezugszeichen versehen und werden daher in der Regel auch jeweils nur einmal benannt bzw. erwähnt.

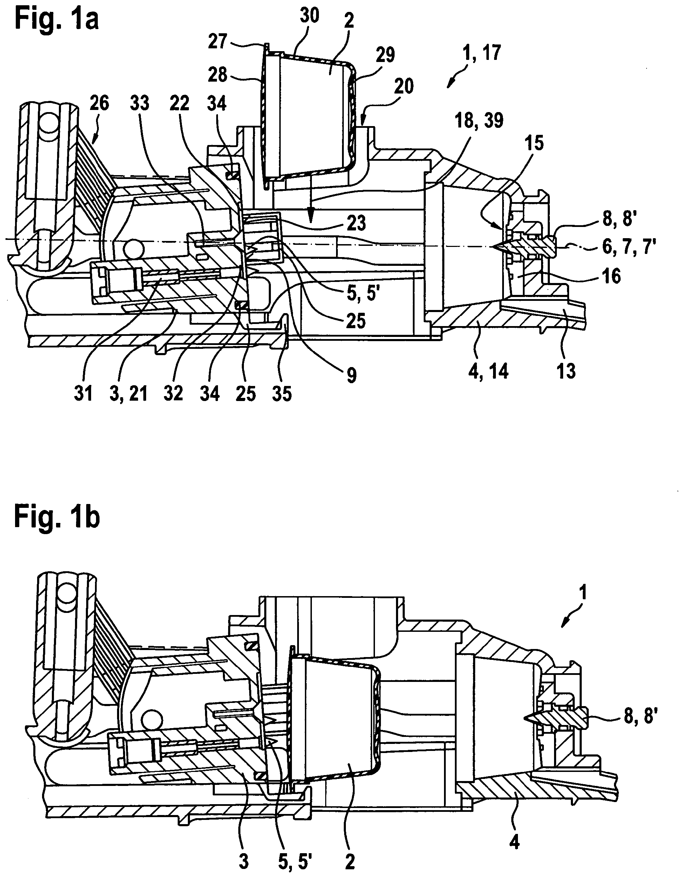

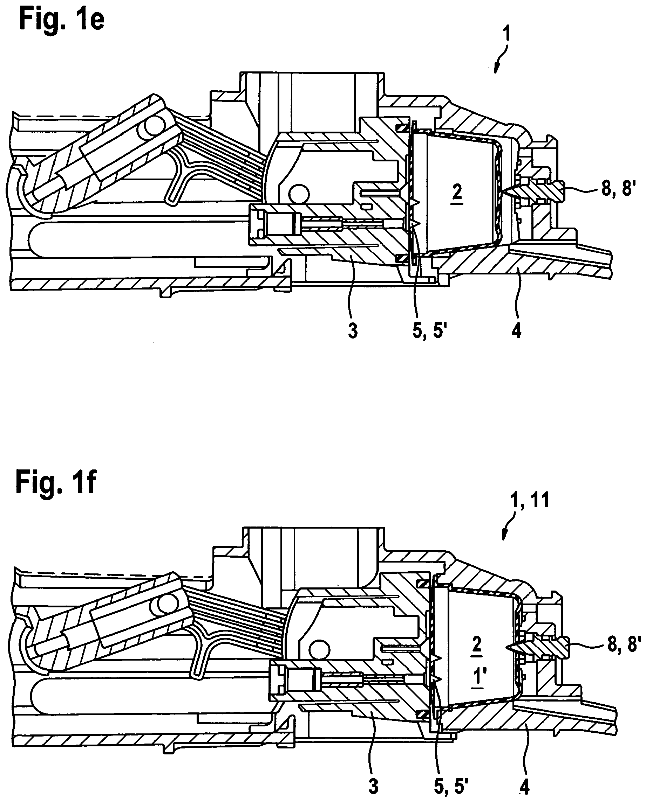

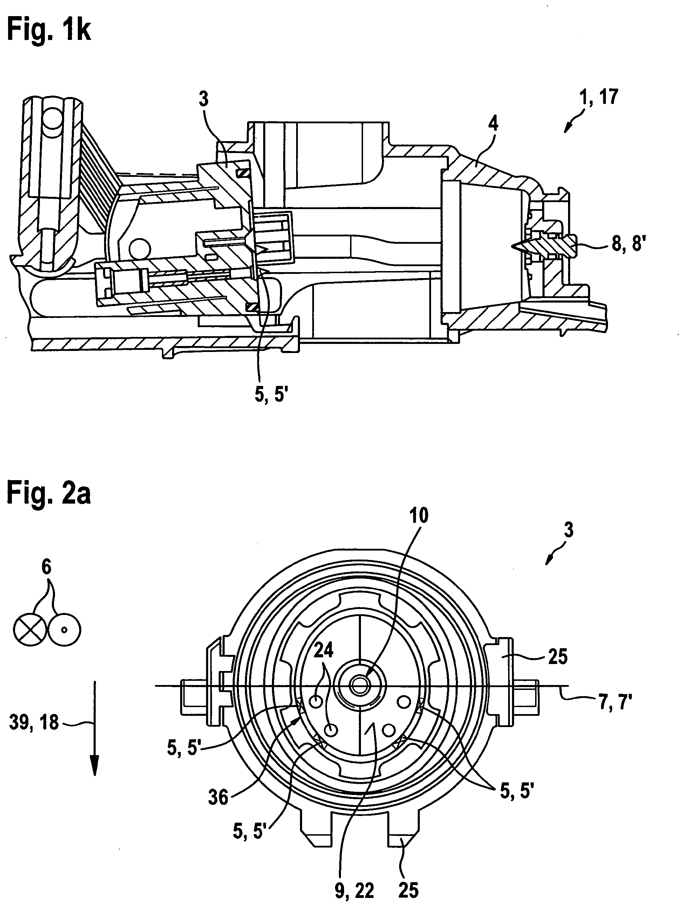

In **Figuren 1a bis 1k** sind schematische Schnittbildansichten einer Brühvorrichtung 1 zum Extrahieren einer Portionskapsel 2 gemäß einer ersten Ausführungsform der vorliegenden Erfindung dargestellt. Die Brühvorrichtung 1 umfasst dabei ein als Aufnahmeelement bzw. teilweise hohles Glockenelement 14 ausgebildetes zweites Brühkammerelement 4 und ein als Verschlusselement 21 bzw. Kolben ausgebildetes erstes Brühkammerelement 3. Das erste Brühkammerelement 3 ist relativ zum zweiten Brühkammerelement 4 entlang einer axialen Richtung 6 zwischen einer in Figuren 1a und 1k illustrierten Ladestellung 17 und einer in Figur 1f illustrierten Extraktionsstellung 11 bewegbar.

Die Portionskapsel 2 umfasst einen aus Kunststoff gefertigten und topfförmig ausgebildeten Kegelstumpf 30. Der Kegelstumpf 30 wird mittels eines aus Kunststoff- und/oder Aluminiumfolie gefertigten Kapseldeckels 28 luftdicht verschlossen. Innerhalb der Portionskapsel 2 befindet sich eine Getränkesubstanz, insbesondere ein mittels einer Extrahierflüssigkeit extrahierbares Röstkaffeepulver. Optional weist die Portionskapsel 2 ein nicht abgebildetes Filterelement auf, welches (möglicherweise vom Kapselboden 29 beabstandet) zwischen dem Kapselboden 29 und der Getränkesubstanz angeordnet ist. Der Kapseldeckel 28 ist im Bereich eines Kapselflansches 27 mit dem Kegelstumpf 30 verklebt oder verschweißt.

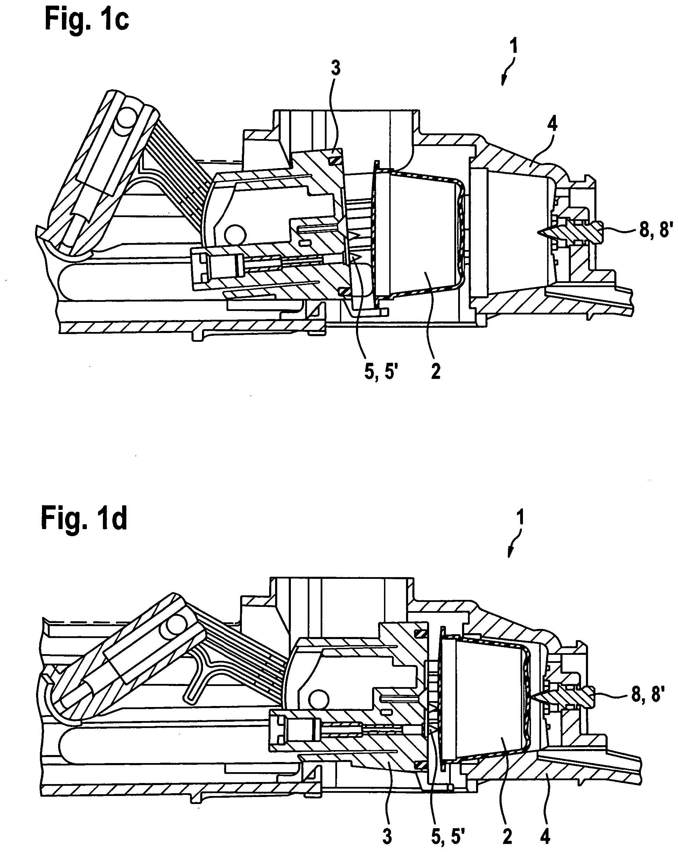

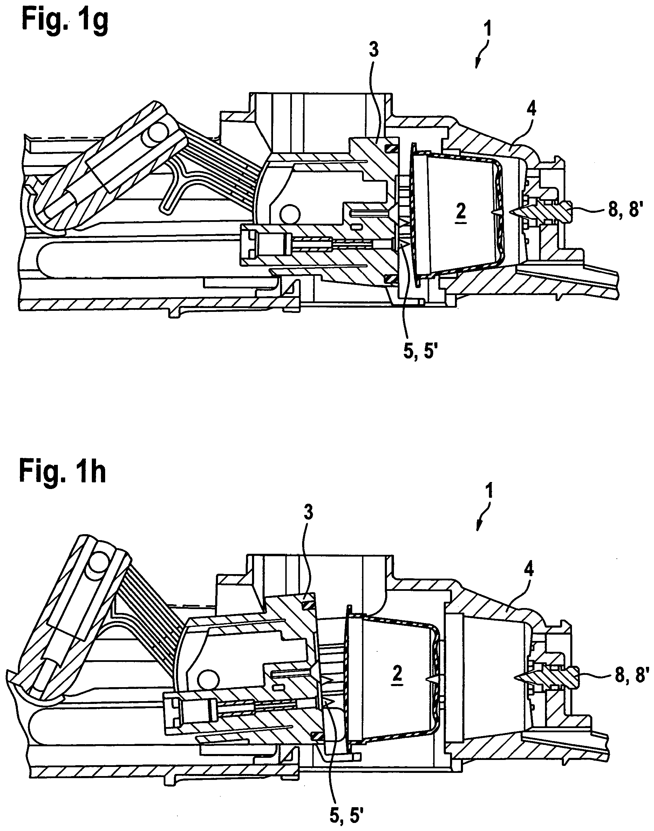

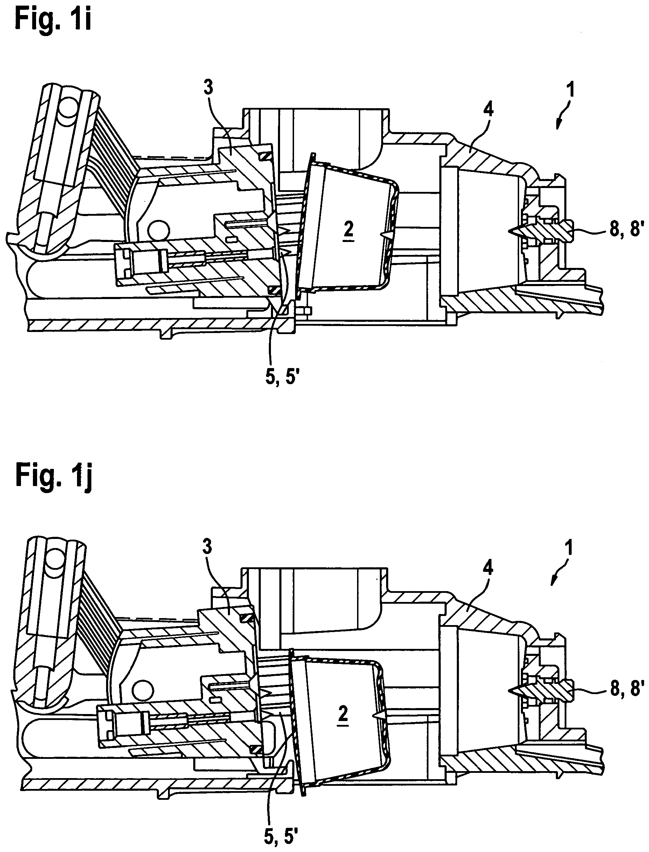

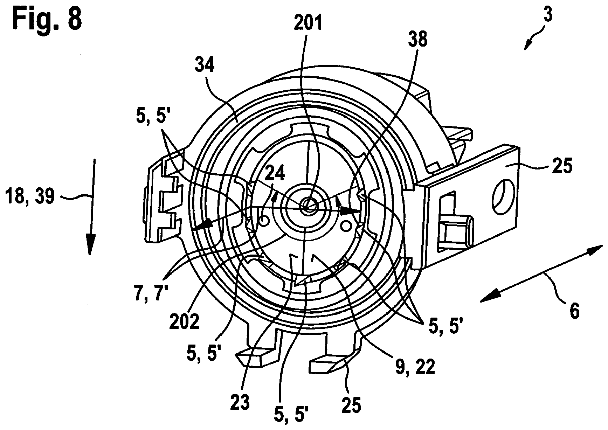

Das erste Brühkammerelement 3 weist auf einer dem zweiten Brühkammerelement 4 zugewandten Seite ein Perforationselement 22 auf, welches eine im Wesentlichen runde Grundfläche 9 umfasst, an deren Peripheriebereich in Umfangsrichtung vier erste Perforationsmittel 5 ausgebildet sind. Die ersten Perforationsmittel 5 sind dabei mit einem nahezu konstanten Radius um einen zentralen Punkt 201 (siehe Figur 8) auf der dem zweiten Brühkammerelement 4 zugewandten Grundfläche 9 des ersten Brühkammerelements 3 angeordnet. Die ersten Perforationsmittel 5 umfassen jeweils eine Perforationsspitze 5', welche in Richtung des zweiten Brühkammerelements 4 von der Grundfläche 9 absteht. Ferner sind in der Grundfläche 9 vier Wasseraustrittsöffnungen 24 ausgebildet (aus perspektivischen Gründen in den Figuren 1**a bis** 1k nicht zu erkennen), wobei immer genau eine Wasseraustrittsöffnung 24 in der Nähe einer Perforationsspitze 5' angeordnet ist. Die ersten Perforationsmittel 5 sind entlang des Schwerefelds 39 der Erde allesamt unterhalb einer als Horizontalebene 7' ausgebildeten Ebene 7 angeordnet. Die Horizontalebene 7' erstreckt sich im Wesentlichen mittig durch die Brühkammer 1' und im Wesentlichen rechtwinklig zum Schwerefeld 39.

In einer nicht im Detail dargestellten alternativen Ausführungsform weist die Brühvorrichtung 1 nur genau ein einziges erstes Perforationsmittel 5 auf, welches entlang dem Schwerefeld 39 unterhalb der Horizontalebene 7' angeordnet ist. Vorzugsweise ist das eine erste Perforationsmittel 5 hierbei im Wesentlichen in einem entlang des Schwerefelds 39 unteren Randbereich des ersten Brühkammerelements 3 angeordnet, um einen maximalen Abstand zwischen der Zuführöffnung 20 und dem ersten Perforationsmittel 5 herzustellen.

Das erste Brühkammerelement 3 weist einen Wasserzuführkanal 31 auf, welcher in eine zwischen dem ersten Brühkammerelement 3 und dem Perforationselement 22 ausgebildete Ausbuchtung 32 mündet, so dass sich durch den Wasserzuführkanal 31 zugeführte Extraktionsflüssigkeit über die Ausbuchtung 32 auf die vier Wasseraustrittsöffnungen 24 verteilen kann. Das Perforationselement 22 ist mittels einer Schraube 33 am ersten Brühkammerelement 3 befestigt. Das zweite Brühkammerelement 4 weist ein zweites Perforationsmittel 8 auf, welches eine in Richtung des ersten Brühkammerelements 3 weisende Aufstechspitze 8' umfasst, die innerhalb des Hohlraums angeordnet ist und über einen Rastverschluss lösbar mit dem zweiten Brühkammerelement 4 verbunden ist. Die Aufstechspitze 8' ist mit seitlichen Nuten versehen, welche sich parallel zur axialen Richtung 6 erstrecken. Im Bereich der Aufstechspitze 8' weist das zweite Brühkammerelement 4 eine Vertiefung 16 im Bodenbereich 15 des Hohlraums auf, in welche ein Ablaufkanal 13 mündet.

In **Figur 1a** ist das erste Brühkammerelement 3 in der Ladestellung 17 illustriert, d.h. das erste Brühkammerelement 3 ist entlang der axialen Richtung 6 von dem zweiten Brühkammerelement 4 beabstandet. In dieser Ausgangsposition wird nun entlang einer Laderichtung 18 die Portionskapsel 2 durch einen nicht abgebildeten Benutzer eingeführt. Ein als Teil des zweiten Brühkammerelements 4 ausgebildetes Gehäuse der Brühvorrichtung 1 weist dazu eine Zuführöffnung 20 auf, durch welche die Portionskapsel 2 eingeführt wird.

In **Figur 1b** ist illustriert, dass die Portionskapsel 2 unter Schwerkrafteinwirkung seitlich in den Bereich zwischen dem ersten und dem zweiten Brühkammerelement 3, 4 fällt und dort mittels nicht näher beschriebenen Haltemitteln 25, welche an dem Kapselflansch 27 der Portionskapsel 2 am ersten Brühkammerelement 3 angreifen, gehalten wird.

Im nächsten Schritt, illustriert anhand der **Figur 1c****,** wird das erste Brühkammerelement 3 über ein Kniehebelgelenk 26 zu einer Bewegung in Richtung des zweiten Brühkammerelements 4 angetrieben.

Anhand der **Figur 1d** wird illustriert, dass kurz bevor der Kapselboden 29 die Aufstechspitze 8' berührt, das erste Brühkammerelement 3 derart aufgerichtet wird, dass die Grundfläche 9 nahezu exakt senkrecht zur axialen Richtung 6 ausgerichtet ist. Die Perforationsspitzen 5' berühren anschließend des Kapseldeckel 28.

Im nächsten Schritt, dargestellt in **Figur 1e****,** wird durch die andauernde Bewegung des ersten Brühkammerelements 3 in Richtung des zweiten Brühkammerelements 4 der Kapseldeckel 28 durch die als Perforationsspitzen 5' ausgebildeten ersten Perforationsmittel 5 perforiert. Der Kapseldeckel 28 wird lediglich unterhalb der Horizontalebene 7' von den ersten Perforationsmitteln 5 perforiert. Der Kapselboden 29 ist zu diesem Zeitpunkt noch nicht perforiert.

In der oben genannten alternativen Ausführungsform wird der Kapseldeckel 28 in einem entlang der Schwerefelds 39 unterem Bereich nur durch das genau eine erste Perforationsmittel 5 perforiert.

In **Figur 1f** ist das erste Brühkammerelement 3 bis zum zweiten Brühkammerelement 4 entlang der axialen Richtung 6 in die Extraktionsstellung 11 verschoben, so dass die Portionskapsel 2 nahezu vollständig in das hohle Glockenelement 14 eingeführt ist und der Kapselboden 29 nun durch das als Aufstechdorn 8' ausgebildete zweite Perforationsmittel 8 perforiert ist. Das erste und das zweite Brühkammerelement 3, 4 bilden somit eine hermetisch geschlossene Brühkammer 1', in welcher die Portionskapsel 2 angeordnet ist. Der Kapselflansch 27 ist dabei zwischen dem ersten und dem zweiten Brühkammerelement 3, 4 insbesondere mittels eines elastischen Dichtrings 34 fest eingeklemmt.

In dieser Stellung wird der Extraktionsvorgang eingeleitet, d.h. der Brühkammer 1' wird Extraktionsflüssigkeit in Form von druckbeaufschlagtem und erhitztem Wasser zugeführt. Die Extraktionsflüssigkeit wird dabei durch den Wasserzuführkanal 31 und die Ausbuchtung 32 zu den Wasseraustrittsöffnungen 24 gefördert und gelangt dort durch die mittels der ersten Perforationsmittel 5 erzeugten Perforationsöffnungen im Kapseldeckel 28 in die Portionskapsel 2. Die Getränkesubstanz wird von der Extraktionsflüssigkeit durchströmt, so dass sich ein Getränkeextrakt bildet, welcher die Portionskapsel 2 durch das mittels des Aufstechdorns 8' im Kapselboden 29 erzeugte Perforationsloch wieder verlässt und durch die Vertiefung 16 in den Ablaufkanal 13 gelangt. Mittels des Ablaufkanals 13 wird der Getränkeextrakt vorzugsweise direkt einem nicht abgebildeten Trinkgefäß, wie einer Kaffeetasse zugeführt. Die Extraktionsflüssigkeit durchströmt die Portionskapsel 2 dabei in jedem Fall im Bereich des in der Portionskapsel 2 angeordneten Getränkesubstanz, auch wenn diese durch Schwerkrafteinwirkung in der Portionskapsel 2 nach unten rutscht.

Nach dem Extraktionsvorgang wird das erste Brühkammerelement 3 von der Extraktionsstellung 11 parallel zur axialen Richtung 6 wieder zurück in die Ladestellung 17 bewegt. Dies ist anhand von **Figuren 1g bis 1j** illustriert. Die verbrauchte Portionskapsel 2 wird dabei vom ersten Brühkammerelement 3 soweit wieder mit zurückgezogen bis der Kapselflansch 27 in Kontakt mit einem nicht näher beschriebenen Auswerfer 35 gelangt, wodurch die Portionskapsel 2 außer Eingriff mit den Haltemitteln 25 kommt und unter Schwerkrafteinwirkung selbstständig aus dem Bereich zwischen dem ersten und dem zweiten Brühkammerelement 3, 4 fällt, beispielsweise in einen nicht gezeigten Auffangbehälter.

Anschließend befindet sich das erste Brühkammerelement 3, wie in **Figur 1k** gezeigt, wieder in der Ladeposition 17, so dass eine erneute Befüllung der Brühvorrichtung 1 mit einer unverbrauchten Portionskapsel 2 gemäß Figur 1a möglich ist.

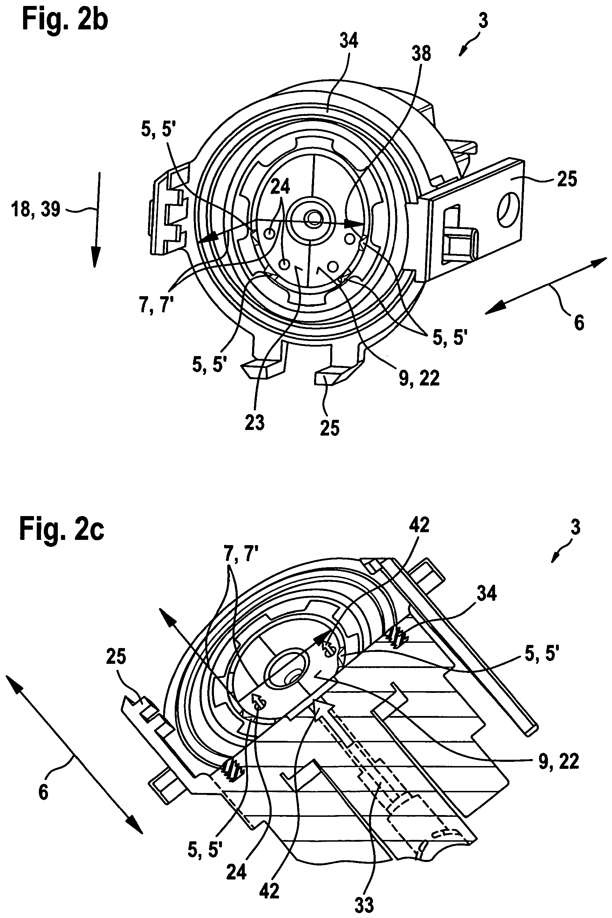

In **Figuren 2a bis 2c** sind schematische Ansichten eines ersten Brühkammerelements 3 einer Brühvorrichtung 1 gemäß einer zweiten Ausführungsform der vorliegenden Erfindung dargestellt, wobei die Brühvorrichtung 1 gemäß der zweiten Ausführungsform im Wesentlichen der in Figuren 1a bis 1k illustrierten Brühvorrichtung 1 gemäß der ersten Ausführungsform gleicht. Die ersten Perforationsmittel 5 sind als Perforationsspitzen 5' ausgebildet, welche in der Projektion entlang der axialen Richtung 6 nahezu einen linienförmigen Querschnitt 36 aufweisen, welcher entlang des Umfangs der Grundfläche 9 gebogen ist. In einer zur axialen Richtung 6 parallelen Ebene weisen die Perforationsspitzen 5' jeweils ein dreieckiges Profil auf, welches jeweils parallel zur Schneidebene 19 verläuft, da die Schneidkanten der Perforationsspitzen 5' jeweils durch die Schenkel 38 der Dreiecke gebildet werden. Die Perforationsspitzen 5' sind in einer zur axialen Richtung 6 senkrechten Ebene jeweils mit nahezu konstanten Radius (die Stirnfläche 9 ist leicht oval, anstelle von kreisrund) um einen zentralen Punkt 201 auf der Grundfläche 9 angeordnet. Das Perforationselement 22 mit Grundfläche 9 und Perforierungsspitzen 5' wird dabei im Rahmen eines Stanzprozesses aus einem Blech gestanzt und die Perforierungsspitzen 5' werden anschließend derart gegenüber der Grundfläche 9 knickgebogen, dass die Perforierungsspitzen 5' senkrecht vom Peripheriebereich der Grundfläche 9 abstehen. Die Perforationsspitzen 5' sind dabei entlang des Peripheriebereichs derart verteilt, dass sie gegenüber einer sich entlang der axialen Richtung 6 erstreckenden Ebene 7 asymmetrisch verteilt sind, d.h. die ersten Perforationsmittel 5 sind ausschließlich unterhalb der Ebene 7 angeordnet. Die Ebene 7 umfasst dabei insbesondere eine Horizontalebene 7', welche im Wesentlichen nahezu senkrecht zum Schwerefeld 39 und/oder zur Laderichtung 18 ausgebildet ist. In Figur 2c ist anhand von Pfeilen 42 die Strömung der Extraktionsflüssigkeit in Richtung der Brühkammer 1' illustriert.

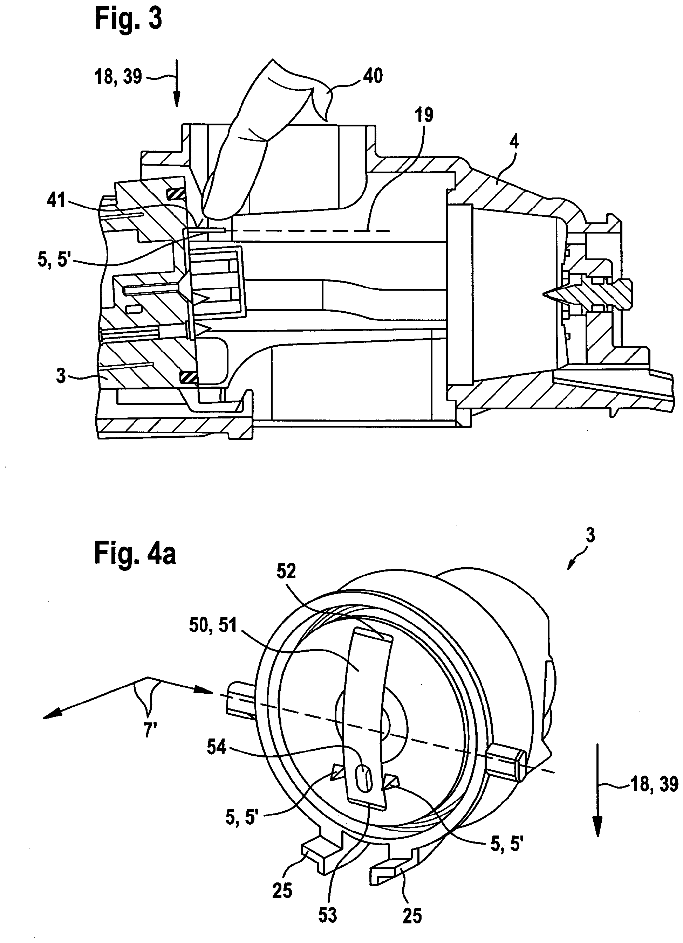

In **Figur 3** ist eine schematische Schnittbildansicht eines ersten Brühkammerelements 3 einer Brühvorrichtung 1 gemäß einer dritten Ausführungsform dargestellt, wobei die Brühvorrichtung 1 gemäß der dritten Ausführungsform im Wesentlichen der in Figuren 2a bis 2c illustrierten Brühvorrichtung 1 gemäß der zweiten Ausführungsform gleicht, wobei im Unterschied zur zweiten Ausführungsform das erstes Perforierungsmittel 5, 5' mit dem geringsten Abstand zur Zuführöffnung 20 eine Schneidebene 19 aufweist, die im Wesentlichen senkrecht zur Laderichtung 18 und/oder zum Schwerefeld 39 ausgerichtet ist. Ein Finger 40 eines Benutzers, welcher von oben durch die Zuführöffnung 20 in die Brühvorrichtung 1 hineingreift, gelangt somit lediglich mit der stumpfen Seitenfläche 41 dieses ersten Perforierungsmittels 5 in Kontakt, so dass die Verletzungsgefahr erheblich reduziert ist. Denkbar ist alternativ, dass dieses erste Perforationsmittel 5, 5' mit dem geringsten Abstand zur Zuführöffnung 20 auch unterhalb der Horizontalebene 7' angeordnet ist.

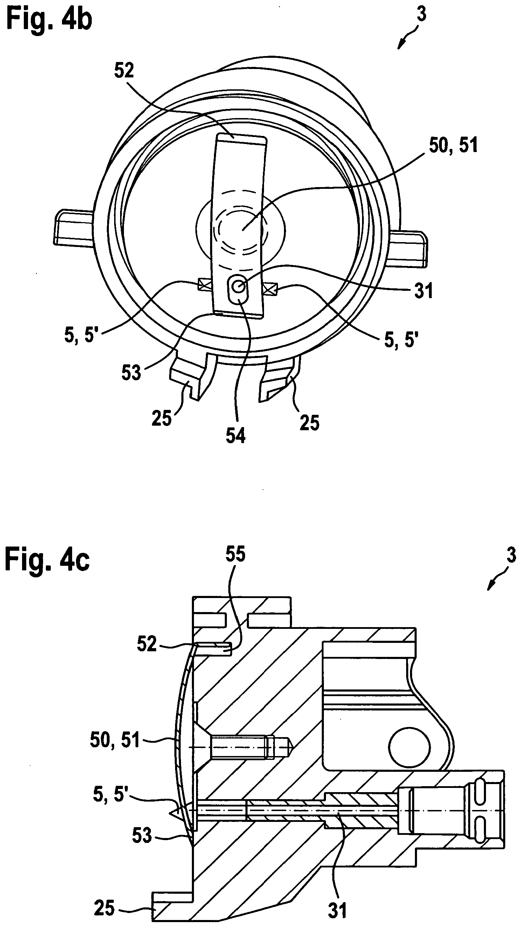

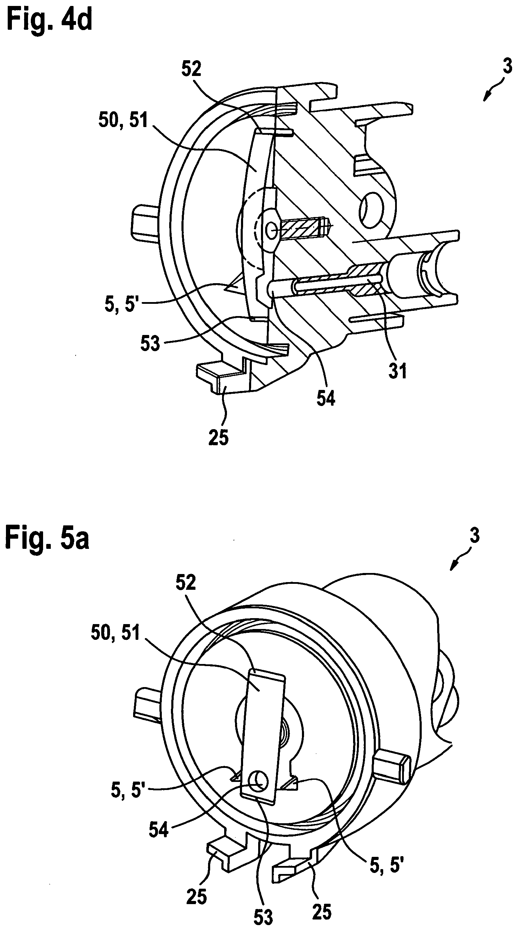

In **Figuren 4a bis 4d** sind schematische Ansichten eines ersten Brühkammerelements 3 einer Brühvorrichtung 1 gemäß einer vierten Ausführungsform der vorliegenden Erfindung dargestellt, wobei die Brühvorrichtung 1 gemäß der vierten Ausführungsform im Wesentlichen der in Figuren 2a bis 2c illustrierten Brühvorrichtung 1 gemäß der zweiten Ausführungsform gleicht, wobei die Brühvorrichtung 1 im Unterschied zur zweiten Ausführungsform lediglich zwei erste Perforationsmittel 5 aufweist, welche entlang des Schwerefelds 39 beide unterhalb der Horizontalebene 7' angeordnet sind. Zwischen den Perforationsspitzen 5' ist ein Beabstandungselement 50 angeordnet. Das Beabstandungselement 50 umfasst einen sich im Wesentlichen parallel zur Laderichtung 18 erstreckenden Metallstreifen 51, welcher mit einem ersten Ende 52 am ersten Brühkammerelement 3 befestigt ist. Hierzu ist das erste Ende 52, wie in Figur 4c zu sehen ist, in Richtung des ersten Brühkammerelements 3 abgewinkelt und fest in einer Ausnehmung 55 des ersten Brühkammerelements 3 eingespannt. Das zweite Ende 53 des Metallstreifens 51 ist ein freies Ende ohne Befestigung am ersten Brühkammerelement 3. Der Metallstreifen 51 weist zwischen dem ersten und dem zweiten Ende 52, 53 eine Krümmung in Richtung des zweiten Brühkammerelements 4 auf. Diese Krümmung dient dazu, eine Portionskapsel 2, welche in der Ladestellung 17 zwischen das erste und zweite Brühkammerelement 3, 4 eingeführt wird, von dem ersten Brühkammerelement 3 zu beabstanden, so dass die Portionskapsel 2 während des Einführvorgangs nicht an den zwei Perforationsspitzen 5' hängen bleibt. Beim Schließen der Brühkammer wird der Metallstreifen 51 von der Portionskapsel 2 gegen das erste Brühkammerelement 3 gedrückt, so dass es in der Extraktionsstellung 11 mit dem ersten Brühkammerelement 3 in Anlage kommt (in den Figuren nicht dargestellt) und den Extraktionsvorgang nicht beeinträchtigt. Das freie zweite Ende 53 bewegt sich hierbei entlang des Schwerefelds 39. Das Beabstandungselement 50 weist ferner ein Durchgangsloch 54 auf, welches mit dem Wasserzuführkanal 31 des ersten Brühkammerelements 3 im Wesentlichen fluchtet und eine Zuführung der Extraktionsflüssigkeit zur Portionskapsel 2 ermöglicht.

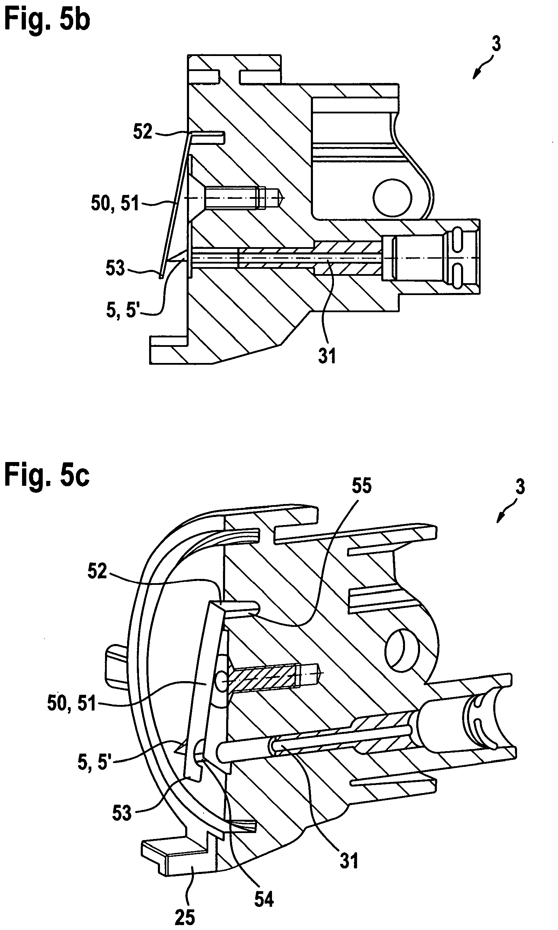

In **Figuren 5a bis 5c** sind schematische Ansichten eines ersten Brühkammerelements 3 einer Brühvorrichtung 1 gemäß einer fünften Ausführungsform der vorliegenden Erfindung dargestellt, wobei die Brühvorrichtung 1 gemäß der fünften Ausführungsform im Wesentlichen der in Figuren 4a bis 4d illustrierten Brühvorrichtung 1 gemäß der vierten Ausführungsform gleicht, wobei die Brühvorrichtung 1 im Unterschied zur vierten Ausführungsform ein Beabstandungselement 50 aufweist, welches keine Krümmung aufweist, sondern bei welchem stattdessen das freie zweite Ende 53 in der Ladestellung 17 schräg in Richtung des zweiten Brühkammerelement 4 vom ersten Brühkammerelement 3 absteht. Beim Überführen des ersten Brühkammerelements 3 von der Ladestellung 17 in die Extraktionsstellung 11 wird das zweite Ende 53 in Richtung des ersten Brühkammerelements 3 verschwenkt, so dass das Beabstandungselement 50 im Wesentlichen entlang seiner gesamten Länge in Anlage mit dem ersten Brühkammerelement 3 gelangt (nicht dargestellt in den Figuren).

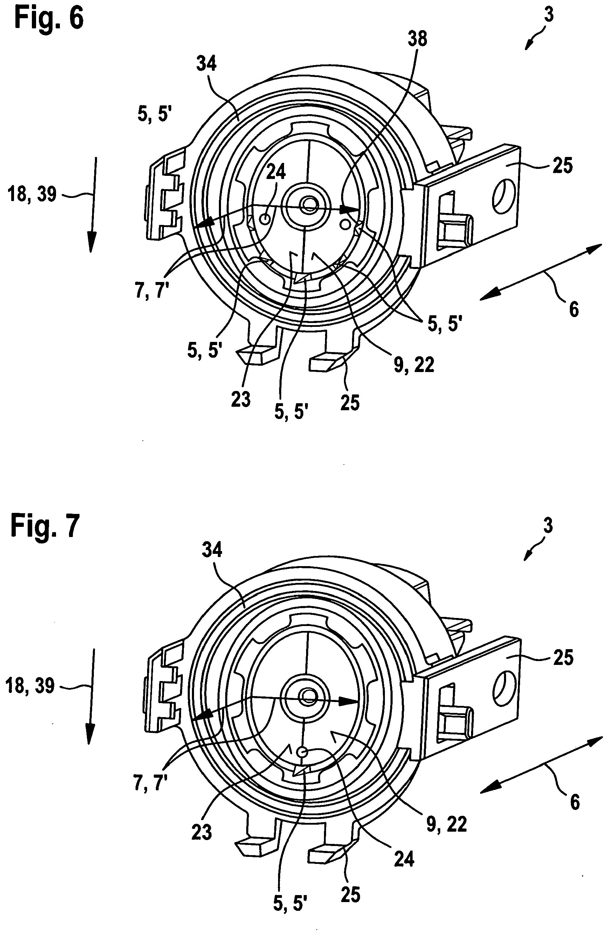

In **Figur 6** ist eine schematische Ansicht eines ersten Brühkammerelements 3 einer Brühvorrichtung 1 gemäß einer sechsten Ausführungsform der vorliegenden Erfindung dargestellt, wobei die Brühvorrichtung 1 gemäß der sechsten Ausführungsform im Wesentlichen der in Figuren 1a bis 1k illustrierten Brühvorrichtung 1 gemäß der ersten Ausführungsform gleicht und in der in Figuren 1a bis 1k illustrierten Brühvorrichtung 1 einsetzbar ist, wobei im Unterschied zur ersten Ausführungsform das erste Brühkammerelement 3 gemäß der sechsten Ausführungsform fünf erste Perforationsmittel 5 aufweist, welche unterhalb der Horizontalebene 7' angeordnet sind.

In **Figur 7** ist eine schematische Ansicht eines ersten Brühkammerelements 3 einer Brühvorrichtung 1 gemäß einer siebten Ausführungsform der vorliegenden Erfindung dargestellt, wobei die Brühvorrichtung 1 gemäß der siebten Ausführungsform im Wesentlichen der in Figuren 1a bis 1k illustrierten Brühvorrichtung 1 gemäß der ersten Ausführungsform gleicht und in der in Figuren 1a bis 1k illustrierten Brühvorrichtung 1 einsetzbar ist, wobei im Unterschied zur ersten Ausführungsform das erste Brühkammerelement 3 nur ein einziges erstes Perforationsmittel 5 aufweist. Dieses einzige erste Perforationsmittel 5 ist dabei im Wesentlichen in einem entlang des Schwerefelds 39 unteren Randbereich des ersten Brühkammerelements 3 angeordnet, um einen maximalen Abstand zwischen der Zuführöffnung 20 und dem ersten Perforationsmittel 3 herzustellen und so die Verletzungsgefahr für einen Benutzer der Brühvorrichtung 1 zu reduzieren.

In **Figur 8** ist eine schematische Ansicht eines ersten Brühkammerelements 3 einer Brühvorrichtung 1 gemäß einer achten Ausführungsform der vorliegenden Erfindung dargestellt, wobei die Brühvorrichtung 1 gemäß der achten Ausführungsform im Wesentlichen der in Figuren 1a bis 1k illustrierten Brühvorrichtung 1 gemäß der ersten Ausführungsform gleicht und in der in Figuren 1a bis 1k illustrierten Brühvorrichtung 1 einsetzbar ist, wobei im Unterschied zur ersten Ausführungsform das erste Brühkammerelement 3 eine Mehrzahl von ersten Perforationsmitteln 5 in Form von Perforationsspitzen 5' aufweist (insgesamt sieben erste Perforationsmittel 5), die um einen zentralen Punkt 201 auf der dem zweiten Brühkammerelement 4 zugewandten Stirnfläche 9 des ersten Brühkammerelements 3 angeordnet sind. Die ersten Perforationsmittel 5 sind dabei nicht nur unterhalb der Horizontalebene 7 angeordnet, sondern stattdessen mit einem im Wesentlichen konstanten Radius in einem Winkelbereich 202 von ca. 230 Grad um den zentralen Punkt 201 herum angeordnet.

### Bezugszeichenliste

- 1: Brühvorrichtung
- 1': Brühkammer
- 2: Portionskapsel
- 3: Erstes Brühkammerelement
- 4: Zweites Brühkammerelement
- 5: Ersten Perforationsmitteln
- 5': Perforationsspitzen
- 6: Axiale Richtung
- 7: Ebene
- 7': Horizontalebene
- 8: Zweite Perforationsmittel
- 8': Aufstechspitze
- 9: Grundfläche
- 11: Extraktionsstellung
- 13: Ablaufkanal
- 14: Hohles Glockenelement, Aufnahmeelement
- 15: Bodenbereich
- 16: Vertiefung
- 17: Ladestellung
- 18: Laderichtung
- 19: Schneidebene
- 20: Zuführöffnung
- 21: Verschlusselement, Kolben
- 22: Perforationselement
- 23: Flächenbereich
- 24: Wasseraustrittsöffnungen
- 25: Haltemittel
- 26: Kniehebelgelenk
- 27: Kapselflansch
- 28: Kapseldeckel
- 29: Kapselboden
- 30: Kegelstumpf
- 31: Wasserzuführkanal
- 32: Ausbuchtung
- 33: Schraube
- 34: Dichtungsring
- 35: Auswerfer
- 36: Linienförmiger Querschnitt
- 38: Schenkel
- 39: Schwerefeld
- 40: Finger
- 41: Seitenfläche
- 42: Strömungsrichtung
- 50: Beabstandungselement
- 51: Metallstreifen
- 52: Erstes Ende
- 53: Zweites Ende
- 54: Durchgangsloch
- 55: Ausnehmung
- 201: Zentraler Punkt
- 202: Winkelbereich

## Patentansprüche

1. Brühvorrichtung (1) zum Extrahieren einer Portionskapsel (2) mit einem ersten Brühkammerelement (3) und einem zweiten Brühkammerelement (4), wobei das erste und/oder das zweite Brühkammerelement (3, 4) entlang einer axialen Richtung (6) zwischen einer Ladestellung (17), in welcher das erste und das zweite Brühkammerelement (3, 4) voneinander beabstandet sind, und einer Extraktionsstellung (11), in welcher das erste und das zweite Brühkammerelement (3, 4) eine im Wesentlichen geschlossene Brühkammer (1') bilden, bewegbar ist, wobei die Brühvorrichtung (1) derart ausgebildet ist, dass die Portionskapsel (2) beim Bewegen des ersten und/oder des zweiten Brühkammerelements (3, 4) von der Ladestellung (17) in die Extraktionsstellung (11) zunächst von dem wenigstens einen ersten Perforationsmittel (5) des ersten Brühkammerelements (3) und erst anschließend von wenigstens einem zweiten Perforationsmittel (8) des zweiten Brühkammerelements (4) perforiert wird, wobei das wenigstens eine erste Perforationsmittel (5) als Perforationsspitze (5') ausgebildet ist, welche von dem ersten Brühkammerelement (3) im Wesentlichen in Richtung des zweiten Brühkammerelements (4) absteht, wobei das erste Brühkammerelement (3) auf einer dem zweiten Brühkammerelement (4) zugewandten Endseite ein Perforationselement (22) aufweist, welches einen zentralen Flächenbereich (23) umfasst, der entlang seines Umfangs einstückig mit dem wenigstens einen Perforationsmittel (5) verbunden ist, **dadurch gekennzeichnet, dass** die wenigstens eine Perforationsspitze (5') entlang der axialen Richtung (6) einen im Wesentlichen linienförmigen Querschnitt aufweist, welcher geradlinig ausgebildet ist, , wobei das Perforationselement (22) durch Knickbiegen des wenigstens einen ersten Perforationsmittels (5) gegenüber dem Flächenbereich (23) hergestellt ist, wobei das wenigstens eine erste Perforationsmittel (5) rechtwinklig vom Flächenbereich (23) absteht.

2. Brühvorrichtung (1) nach Anspruch 1, **dadurch gekennzeichnet, dass** das erste Brühkammerelement (3) wenigstens ein erstes Perforationsmittel (5) zur Perforation der Portionskapsel (2) aufweist, welches entlang eines Schwerefelds (39) der Erde unterhalb einer sich im Wesentlichen rechtwinklig zum Schwerefeld (39) und im Wesentlichen mittig durch die Brühkammer (1') erstreckenden Horizontalebene (7') angeordnet ist, wobei das erste Brühkammerelement (3) eine dem zweiten Brühkammerelement (4) zugewandte Grundfläche (9) aufweist, wobei das erste Brühkammerelement (3) eine Mehrzahl von ersten Perforationsmitteln (5) aufweist, welche unterhalb der Horizontalebene (7') mit einem im Wesentlichen konstanten Radius um einen zentralen Punkt (201) der Grundfläche (9) angeordnet sind.

3. Brühvorrichtung (1) nach Anspruch 2, **dadurch gekennzeichnet, dass** das erste Brühkammerelement (3) eine Mehrzahl von ersten Perforationsmittel (5) zur Perforation der Portionskapsel (2) aufweist, wobei die ersten Perforationsmittel (5) bevorzugt innerhalb eines Winkelbereichs (202) von maximal 230 Grad um den zentralen Punkt (201) angeordnet sind.

4. Brühvorrichtung nach einem der vorhergehenden Ansprüche, **dadurch gekennzeichnet, dass** die Brühvorrichtung (1) derart ausgebildet ist, dass die Portionskapsel (2) beim Bewegen des ersten und/oder des zweiten Brühkammerelements (3, 4) von der Ladestellung (17) in die Extraktionsstellung (11) im Wesentlichen sequentiell von einer Mehrzahl von ersten Perforationsmitteln (5) des ersten Brühkammerelements (3) perforiert wird.

5. Brühvorrichtung (1) nach einem der vorhergehenden Ansprüche, **dadurch gekennzeichnet, dass** in der Ladestellung (17) ein Zuführen der Portionskapsel (2) zwischen das erste und das zweite Brühkammerelement (3, 4) entlang einer Laderichtung (18) vorgesehen ist, wobei das erste Brühkammerelement (3) wenigstens ein erstes Perforationsmittel (5) zur Perforation der Portionskapsel (2) aufweist und wobei die Schneidebene (19) des wenigstens einen ersten Perforationsmittels (5) im Wesentlichen rechtwinklig zur Laderichtung (18) ausgerichtet ist.

6. Brühvorrichtung nach einem der vorhergehenden Ansprüche, **dadurch gekennzeichnet, dass** das erste Brühkammerelement (3) und insbesondere das Perforationselement (22) im Flächenbereich (23) eine Mehrzahl von Wasseraustrittsöffnungen (24) zum Zuführen von Extraktionsflüssigkeit in die mittels des wenigstens einen ersten Perforationsmittels (5) perforierte Portionskapsel (2) aufweist, wobei vorzugsweise jeweils eine Wasseraustrittsöffnung (24) im Wesentlichen benachbart zu dem wenigstens einen ersten Perforationsmittel (5) angeordnet ist.

7. Brühvorrichtung (1) nach einem der vorhergehenden Ansprüche, **dadurch gekennzeichnet, dass** das zweite Brühkammerelement (4) ein hohles Glockenelement (14) zur Aufnahme der Portionskapsel (2) umfasst, wobei ein Bodenbereich (15) des Glockenelements (14) wenigstens eine Vertiefung (16) zum Ableiten von Extraktionsflüssigkeit aus der mittels des zweiten Perforationsmittels (8) perforierten Portionskapsel (2) umfasst, wobei das zweite Perforationsmittel (8) vorzugsweise im Bereich der Vertiefung (16) angeordnet ist und wobei die Vertiefung (16) vorzugsweise in einen Ablaufkanal (13) zum Abführen der Extraktionsflüssigkeit aus der Brühkammer (1') mündet.

8. Verfahren zum Betrieb einer Brühvorrichtung (1) nach einem der vorhergehenden Ansprüche, wobei in einem ersten Verfahrensschritt eine Portionskapsel (2) zwischen das erste und das zweite Brühkammerelement (3, 4) eingeführt wird und wobei in einem nachfolgenden zweiten Verfahrensschritt das erste und/oder zweite Brühkammerelement (3, 4) im Wesentlichen entlang der axialen Richtung (6) von der Ladestellung (17) in die Extraktionsstellung (11) bewegt wird, wobei während des zweiten Verfahrensschrittes die Portionskapsel (2) sequentiell von einer Mehrzahl von ersten Perforationsmitteln (5) des ersten Brühkammerelements (3) perforiert wird und von dem zweiter Perforationsmittel (8) ein Kapselboden (29) der Portionskapsel (2) perforiert wird.

9. Verfahren nach Anspruch 8, **dadurch gekennzeichnet, dass** im zweiten Verfahrensschritt die Portionskapsel (2) innerhalb eines Winkelbereichs (202) von maximal 230 Grad um den zentralen Punkt (201) herum perforiert wird.

10. Verfahren nach einem der Ansprüche 8 oder 9, **dadurch gekennzeichnet, dass** in einem dritten Verfahrensschritt Extraktionsflüssigkeit in die Portionskapsel (2) unterhalb der Horizontalebene (7') und/oder innerhalb eines Winkelbereichs (202) von maximal 230 Grad um den zentralen Punkt (201) herum eingeleitet wird.

## Claims

1. Brewing apparatus (1) for extracting a portion capsule (2), having a first brewing chamber element (3) and a second brewing chamber element (4), wherein the first and/or the second brewing chamber element (3, 4) are/is movable in an axial direction (6) between a loading position (17), in which the first and the second brewing chamber element (3, 4) are spaced apart from each other, and an extraction position (11), in which the first and the second brewing chamber element (3, 4) form a substantially closed brewing chamber (1'), wherein the brewing apparatus (1) is designed such that, when the first and/or the second brewing chamber element (3, 4) is/are moved from the loading position (17) into the extraction position (11), the portion capsule (2) is first of all perforated by the at least one first perforation means (5) of the first brewing chamber element (3) and only then is perforated by at least one second perforation means (8) of the second brewing chamber element (4), wherein the at least one first perforation means (5) is in the form of a perforation point (5') which protrudes from the first brewing chamber element (3) substantially in the direction of the second brewing chamber element (4), wherein the first brewing chamber element (3) has, on an end side facing the second brewing chamber element (4), a perforation element (22) which comprises a central surface region (23) that is connected integrally, around its circumference, to the at least one perforation means (5), **characterized in that** the at least one perforation point (5') has a substantially linear cross section, formed in a rectilinear manner, in the axial direction (6), wherein the perforation element (22) is produced by bending the at least one first perforation means (5) with respect to the surface region (23) by buckling, wherein the at least one first perforation means (5) protrudes from the surface region (23) at right angles.

2. Brewing apparatus (1) according to Claim 1, **characterized in that** the first brewing chamber element (3) has at least one first perforation means (5) for perforating the portion capsule (2), said first perforation means (5) being arranged in the Earth's gravitational field (39) below a horizontal plane (7') extending substantially at right angles to the gravitational field (39) and substantially centrally through the brewing chamber (1'), wherein the first brewing chamber element (3) has a base surface (9) facing the second brewing chamber element (4), wherein the first brewing chamber element (3) has a plurality of first perforation means (5) which are arranged below the horizontal plane (7') with a substantially constant radius about a central point (201) of the base surface (9).

3. Brewing apparatus (1) according to Claim 2, **characterized in that** the first brewing chamber element (3) has a plurality of first perforation means (5) for perforating the portion capsule (2), wherein the first perforation means (5) are arranged preferably within an angular range (202) of at most 230 degrees about the central point (201).

4. Brewing apparatus according to one of the preceding claims, **characterized in that** the brewing apparatus (1) is configured such that, when the first and/or the second brewing chamber element (3, 4) is/are moved from the loading position (17) into the extraction position (11), the portion capsule (2) is perforated substantially sequentially by a plurality of first perforation means (5) of the first brewing chamber element (3).

5. Brewing apparatus (1) according to one of the preceding claims, **characterized in that**, in the loading position (17), the portion capsule (2) is fed in a loading direction (18) between the first and the second brewing chamber element (3, 4), wherein the first brewing chamber element (3) has at least one first perforation means (5) for perforating the portion capsule (2), and wherein the cutting plane (19) of the at least one first perforation means (5) is oriented substantially at right angles to the loading direction (18).

6. Brewing apparatus according to one of the preceding claims, **characterized in that** the first brewing chamber element (3) and in particular the perforation element (22) has a plurality of water outlet openings (24) in the surface region (23) for feeding extraction liquid into the portion capsule (2) perforated by means of the at least one first perforation means (5), wherein preferably in each case one water outlet opening (24) is arranged substantially adjacent to the at least one first perforation means (5).

7. Brewing apparatus (1) according to one of the preceding claims, **characterized in that** the second brewing chamber element (4) comprises a hollow bellshaped element (14) for receiving the portion capsule (2), wherein a base region (15) of the bellshaped element (14) comprises at least one recess (16) for conducting away extraction liquid from the portion capsule (2) perforated by means of the second perforation means (8), wherein the second perforation means (8) is arranged preferably in the region of the recess (16), and wherein the recess (16) leads preferably into a drainage channel (13) for removing the extraction liquid from the brewing chamber (1').

8. Method for operating a brewing apparatus (1) according to one of the preceding claims, wherein, in a first method step, a portion capsule (2) is inserted between the first and the second brewing chamber element (3, 4), and wherein, in a subsequent second method step, the first and/or second brewing chamber element (3, 4) is moved substantially in the axial direction (6) from the loading position (17) into the extraction position (11), wherein, during the second method step, the portion capsule (2) is perforated sequentially by a plurality of first perforation means (5) of the first brewing chamber element (3), and a capsule base (29) of the portion capsule (2) is perforated by the second perforation means (8).

9. Method according to Claim 8, **characterized in that**, in the second method step, the portion capsule (2) is perforated within an angular range (202) of at most 230 degrees about the central point (201).

10. Method according to either of Claims 8 and 9, **characterized in that**, in a third method step, extraction liquid is introduced into the portion capsule (2) below the horizontal plane (7') and/or within an angular range (202) of at most 230 degrees about the central point (201).

## Revendications

1. Dispositif d'infusion (1) pour l'extraction d'une capsule dosette (2), comprenant un premier élément de chambre d'infusion (3) et un deuxième élément de chambre d'infusion (4), le premier et/ou le deuxième élément de chambre d'infusion (3, 4) pouvant être déplacés le long d'une direction axiale (6) entre une position de chargement (17), dans laquelle le premier et le deuxième élément de chambre d'infusion (3, 4) sont espacés l'un de l'autre, et une position d'extraction (11), dans laquelle le premier et le deuxième élément de chambre d'infusion (3, 4) forment une chambre d'infusion essentiellement fermée (1'), le dispositif d'infusion (1) étant configuré de telle sorte que, lors du déplacement du premier et/ou du deuxième élément de chambre d'infusion (3, 4) de la position de chargement (17) dans la position d'extraction (11), la capsule dosette (2) est perforée tout d'abord par l'au moins un premier moyen de perforation (5) du premier élément de chambre d'infusion (3) et seulement ensuite par au moins un deuxième moyen de perforation (8) du deuxième élément de chambre d'infusion (4), l'au moins un premier moyen de perforation (5) étant configuré sous forme de pointe de perforation (5'), qui fait saillie à partir du premier élément de chambre d'infusion (3) essentiellement en direction du deuxième élément de chambre d'infusion (4), le premier élément de chambre d'infusion (3) présentant, sur un côté d'extrémité tourné vers le deuxième élément de chambre d'infusion (4), un élément de perforation (22), qui comprend une zone de surface centrale (23) qui, le long de sa circonférence, est reliée d'un seul tenant à l'au moins un moyen de perforation (5), **caractérisé en ce que** l'au moins une pointe de perforation (5') présente une section transversale essentiellement linéaire le long de la direction axiale (6), qui est configurée sous forme rectiligne, l'élément de perforation (22) étant fabriqué par pliage de l'au moins un premier moyen de perforation (5) par rapport à la zone de surface (23), l'au moins un premier moyen de perforation (5) faisant saillie à angle droit à partir de la zone de surface (23) .

2. Dispositif d'infusion (1) selon la revendication 1, **caractérisé en ce que** le premier élément de chambre d'infusion (3) présente au moins un premier moyen de perforation (5) pour la perforation de la capsule dosette (2), qui est agencé le long d'un champ de pesanteur (39) de la Terre en dessous d'un plan horizontal (7') s'étendant essentiellement à angle droit du champ de pesanteur (39) et essentiellement au centre à travers la chambre d'infusion (1'), le premier élément de chambre d'infusion (3) présentant une surface de base (9) tournée vers le deuxième élément de chambre d'infusion (4), le premier élément de chambre d'infusion (3) présentant une pluralité de premiers moyens de perforation (5), qui sont agencés en dessous du plan horizontal (7') avec un rayon essentiellement constant autour d'un point central (201) de la surface de base (9).

3. Dispositif d'infusion (1) selon la revendication 2, **caractérisé en ce que** le premier élément de chambre d'infusion (3) présente une pluralité de premiers moyens de perforation (5) pour la perforation de la capsule dosette (2), les premiers moyens de perforation (5) étant de préférence agencés dans les limites d'une plage angulaire (202) d'au maximum 230 degrés autour du point central (201).

4. Dispositif d'infusion selon l'une quelconque des revendications précédentes, **caractérisé en ce que** le dispositif d'infusion (1) est configuré de telle sorte que lors du déplacement du premier et/ou du deuxième élément de chambre d'infusion (3, 4) de la position de chargement (17) à la position d'extraction (11), la capsule dosette (2) est perforée essentiellement de manière séquentielle par une pluralité de premiers moyens de perforation (5) du premier élément de chambre d'infusion (3) .

5. Dispositif d'infusion (1) selon l'une quelconque des revendications précédentes, **caractérisé en ce que**, dans la position de chargement (17), une introduction de la capsule dosette (2) entre le premier et le deuxième élément de chambre d'infusion (3, 4) le long d'une direction de chargement (18) est prévue, le premier élément de chambre d'infusion (3) présentant au moins un premier moyen de perforation (5) pour la perforation de la capsule dosette (2) et le plan de coupe (19) de l'au moins un premier moyen de perforation (5) étant orienté essentiellement à angle droit de la direction de chargement (18).

6. Dispositif d'infusion selon l'une quelconque des revendications précédentes, **caractérisé en ce que** le premier élément de chambre d'infusion (3), et notamment l'élément de perforation (22), présente dans la zone de surface (23) une pluralité d'ouvertures de sortie d'eau (24) pour l'introduction de liquide d'extraction dans la capsule dosette (2) perforée au moyen de l'au moins un premier moyen de perforation (5), une ouverture de sortie d'eau (24) étant de préférence respectivement agencée essentiellement au voisinage de l'au moins un premier moyen de perforation (5).

7. Dispositif d'infusion (1) selon l'une quelconque des revendications précédentes, **caractérisé en ce que** le deuxième élément de chambre d'infusion (4) comprend un élément en cloche creux (14) pour la réception de la capsule dosette (2), une zone de fond (15) de l'élément en cloche (14) comprenant au moins un renfoncement (16) pour l'évacuation de liquide d'extraction de la capsule dosette (2) perforée au moyen du deuxième moyen de perforation (8), le deuxième moyen de perforation (8) étant de préférence agencé dans la zone du renfoncement (16) et le renfoncement (16) débouchant de préférence dans un canal de déchargement (13) pour l'évacuation du liquide d'extraction de la chambre d'infusion (1').

8. Procédé d'exploitation d'un dispositif d'infusion (1) selon l'une quelconque des revendications précédentes, dans lequel, dans une première étape de procédé, une capsule dosette (2) est insérée entre le premier et le deuxième élément de chambre d'infusion (3, 4) et dans lequel, dans une deuxième étape de procédé ultérieure, le premier et/ou le deuxième élément de chambre d'infusion (3, 4) est déplacé essentiellement le long de la direction axiale (6) de la position de chargement (17) à la position d'extraction (11), dans lequel, pendant la deuxième étape de procédé, la capsule dosette (2) est perforée de manière séquentielle par une pluralité de premiers moyens de perforation (5) du premier élément de chambre d'infusion (3) et un fond de capsule (29) de la capsule dosette (2) est perforé par le deuxième moyen de perforation (8) .

9. Procédé selon la revendication 8, **caractérisé en ce que**, dans la deuxième étape du procédé, la capsule dosette (2) est perforée dans les limites d'une plage angulaire (202) d'au maximum 230 degrés autour du point central (201).

10. Procédé selon l'une quelconque des revendications 8 ou 9, **caractérisé en ce que**, dans une troisième étape de procédé, du liquide d'extraction est conduit dans la capsule dosette (2) en dessous du plan horizontal (7') et/ou dans les limites d'une zone angulaire (202) d'au maximum 230 degrés autour du point central (201).
